# EUROPÄISCHE PATENTANMELDUNG

(11) **EP 4 397 220 A1**
(43) Veröffentlichungstag der Anmeldung: **10.07.2024**
(21) Anmeldenummer: 23215365.0
(22) Anmeldetag: 08.12.2023
(51) Int. Cl.: A47K 13/12, E05D 11/06

(54) **SCHWENKBARE ÖFFNUNGS- UND SCHLIESSVORRICHTUNG FÜR EINESMARTE TOILETTENABDECKUNG**

(30) Priorität: 04.01.2023 CN 202320014936 U
(71) Anmelder: Oceanwell (Xiamen) Industrial Co., Ltd., Xiamen, Fujian (CN)
(72) Erfinder: Lin, Fenglie, Dongfu Town, Haicang Dist., Xiamen (CN); Peng, Dong, Dongfu Town, Haicang Dist., Xiamen (CN); Zhang, Junhua, Dongfu Town, Haicang Dist., Xiamen (CN)
(74) Vertreter: Rätsch, Caroline

(57) **Zusammenfassung**

Die Erfindung betrifft eine schwenkbare Öffnungs- und Schließvorrichtung für eine smarte Toilettenabdeckung, umfassend eine obere Abdeckung und ein rückwärtiges Gehäuse, wobei die vordere Abdeckung relativ zu dem rückwärtigen Gehäuse zum Öffnen angehoben und zum Schließen abgesenkt werden kann, wobei die obere Abdeckung nach dem Absenken zum Schließen an der Vorderseite des rückwärtigen Gehäuses angeordnet ist, dadurch gekennzeichnet, dass in dem rückwärtigen Gehäuse eine Schwenkachse und ein Gelenkteil angeordnet sind, wobei ein Ende des Gelenkteils mit der Schwenkachse verbunden ist, während das andere Ende des Gelenkteils aus der Vorderseite des rückwärtigen Gehäuses herausragt und mit der oberen Abdeckung verbunden ist, wobei in dem rückwärtigen Gehäuse ferner ein Gummipuffer vorgesehen ist, der mit dem Gelenkteil zusammenwirkt, und wobei sich die obere Abdeckung nach dem Anheben zum Öffnen oberhalb des rückwärtigen Gehäuses befindet und das Gelenkteil den Gummipuffer nach oben presst. Das Gelenkteil ragt aus der Vorderseite des rückwärtigen Gehäuses heraus, sodass das Gelenkteil nach dem Öffnen der oberen Abdeckung an dem innerhalb des rückwärtigen Gehäuses befindlichen Gummipuffer anliegen kann, was nicht nur ein Öffnen und Positionieren der Abdeckung gestattet, sondern auch einen Puffer für die obere Abdeckung und das rückwärtige Gehäuse darstellt, um einen Rückprall der oberen Abdeckung beim Aufprallen zu verhindern.

## Beschreibung

### Technisches Gebiet

Die Erfindung offenbart eine schwenkbare Öffnungs- und Schließvorrichtung für eine smarte Toilettenabdeckung und liegt auf dem Gebiet der Sanitärprodukte.

### Stand der Technik

Eine smarte Toilettenabdeckung umfasst üblicherweise ein oberes Abdeckungsteil und ein rückwärtiges Gehäuseteil, wobei innerhalb des rückwärtigen Gehäuseteils eine smarte Komponente angeordnet ist, während das rückwärtige Gehäuseteil am rückwärtigen Teil der Oberseite der Toilettenschüssel angebracht ist. Das obere Abdeckungsteil weist an seinem rückwärtigen Ende auf beiden Seiten eine Verbindungseinrichtung auf, die mit dem rückwärtigen Gehäuseteil derart verbunden ist, dass das obere Abdeckungsteil frei öffnen und schließen kann und beim Absenken die Toilettenschüssel abdeckt. Wenn der Elektromotor der smarten Komponente allerdings das obere Abdeckungsteil zum Öffnen antreibt, erfährt das obere Abdeckungsteil aufgrund seiner Trägheit ein Rückprallen und Schwingen. Dies führt bei einer zu hohen Klapp-Geschwindigkeit der Abdeckung zu einem harten Aufprall des oberen Abdeckungsteils und des rückwärtigen Gehäuseteils und einem zu großen Rückprallwinkel, was bei einem häufigen Aufprallen langfristig zu einer Beschädigung der smarten Komponente durch Überbeanspruchung führt.

### Erfindung

Die Erfindung stellt eine schwenkbare Öffnungs- und Schließvorrichtung für eine smarte Toilettenabdeckung zur Verfügung, die die Nachteile im Stand der Technik überwindet. Das technische Problem wird erfindungsgemäß gelöst durch eine:
Schwenkbare Öffnungs- und Schließvorrichtung für eine smarte Toilettenabdeckung, umfassend eine obere Abdeckung und ein rückwärtiges Gehäuse, wobei die obere Abdeckung relativ zu dem rückwärtigen Gehäuse zum Öffnen angehoben und zum Schließen abgesenkt werden kann, wobei die obere Abdeckung nach dem Absenken zum Schließen an der Vorderseite des rückwärtigen Gehäuses angeordnet ist, wobei in dem rückwärtigen Gehäuse eine Schwenkachse und ein Gelenkteil angeordnet sind, wobei ein Ende des Gelenkteils mit der Schwenkachse verbunden ist, während das andere Ende des Gelenkteils aus der Vorderseite des rückwärtigen Gehäuses herausragt und mit der oberen Abdeckung verbunden ist, wobei in dem rückwärtigen Gehäuse ferner ein Gummipuffer vorgesehen ist, der mit dem Gelenkteil zusammenwirkt, und wobei sich die obere Abdeckung nach dem Anheben zum Öffnen oberhalb des rückwärtigen Gehäuses befindet und das Gelenkteil den Gummipuffer nach oben presst.

Weil das Gelenkteil aus der Vorderseite des rückwärtigen Gehäuses herausragt, kann das Gelenkteil nach dem Öffnen der oberen Abdeckung an dem innerhalb des rückwärtigen Gehäuses befindlichen Gummipuffer anliegen, was nicht nur ein Öffnen und Positionieren der Abdeckung gestattet, sondern auch einen Puffer für die obere Abdeckung und das rückwärtige Gehäuse darstellt, um einen Rückprall der oberen Abdeckung beim Aufprallen zu verhindern.

Bei einer vorteilhaften Ausführungsform ist vorgesehen, dass das Gelenkteil C-förmig ausgebildet ist, wobei das andere Ende des Gelenkteils mit der Unterseite der oberen Abdeckung verbunden ist. Die Konstruktion des Gelenkteils ist insoweit zweckmäßiger, als es nicht nur die obere Abdeckung zum Öffnen und Schließen antreibt, sondern nach dem Absenken der oberen Abdeckung im Wesentlichen in dem rückwärtigen Gehäuse aufgenommen ist.

Bei einer vorteilhaften Ausführungsform ist vorgesehen, dass das andere Ende des Gelenkteils derart abgebogen ist, dass es eine flache Druckplatte bildet, die mit der oberen Abdeckung fest verbunden ist. Dadurch, dass die Druckplatte mit der oberen Abdeckung verbunden ist, wird eine festere Verbindung hergestellt.

Vorteilhaft ist vorgesehen, dass auf der Unterseite der oberen Abdeckung ein der Druckplatte zugeordneter Positioniervorsprung vorgesehen ist, wobei in dem Positioniervorsprung eine Befestigungsaufnahme ausgebildet ist, und wobei die Druckplatte in die Befestigungsaufnahme eingesetzt ist. Die Druckplatte ist mit dem Positioniervorsprung verbunden und kann mit Schrauben fixiert sein, um die obere Abdeckung zu sichern.

Vorzugsweise ist auf der Unterseite des rückwärtigen Gehäuses ein Vorsprung vorgesehen, wobei der Gummipuffer auf den Vorsprung gesteckt oder in dem Vorsprung eine Ausnehmung vorgesehen ist, in die ein Ende des Gummipuffers unter Verformung eingepresst ist. Der Vorsprung kann die Montage des Gummipuffers erleichtern. Er verringert die Höhe des Gummipuffers, gewährleistet eine weiche abgestimmte Verbindung zwischen dem Gummipuffer und dem Gelenkteil und schafft eine einfache Konstruktion der oberen Abdeckung.

Bei einer vorteilhaften Ausführungsform ist vorgesehen, dass die hintere Endfläche der oberen Abdeckung und die Vorderseite des rückwärtigen Gehäuses als geneigte Flächen ausgebildet sind, die aufeinander abgestimmt sind. Hierdurch ist ein störungsfreies Öffnen und Absenken der oberen Abdeckung möglich.

Vorteilhaft ist vorgesehen, dass der untere Bereich der Vorderseite des rückwärtigen Gehäuses einen sich nach vorne erstreckenden Verbindungsabschnitt zur schwenkbaren Anlenkung eines Sitzes aufweist.

Bei einer vorteilhaften beispielhaften Ausführungsform ist vorgesehen, dass innerhalb des rückwärtigen Gehäuses eine Montageaufnahme ausgebildet ist, wobei ferner ein Elektromotor und eine Getriebezahnradgruppe vorgesehen sind, die mit dem Elektromotor und der Schwenkachse in Übertragungsverbindung steht, wobei der Elektromotor und die Getriebezahnradgruppe zusammengebaut ein Antriebsmodul bilden, das in die Montageaufnahme eingesetzt ist, und wobei eine Befestigungsplatte mittels Schrauben mit der rückwärtigen Abdeckung verbunden ist, um das Antriebsmodul in der Montageaufnahme zu sichern.

Bei einer vorteilhaften beispielhaften Ausführungsform ist vorgesehen, dass ein Ende des Gelenkteils die Schwenkachse umgreift.

Vorteilhaft ist vorgesehen, dass es sich bei dem Gelenkteil um ein Gelenkteil aus Metall handelt.

### Figurenbeschreibung

Im Folgenden wird die Erfindung anhand von einem Ausführungsbeispiel im Zusammenhang mit den Figuren beschrieben.
Figur 1 zeigt eine dreidimensionale Explosionsansicht der schwenkbaren Öffnungs- und Schließvorrichtung für eine smarte Toilettenabdeckung.
Figur 2 zeigt eine dreidimensionale Ansicht der schwenkbaren Öffnungs- und Schließvorrichtung für eine smarte Toilettenabdeckung im zusammengebauten Zustand.
Figur 3 zeigt eine dreidimensionale Schnittansicht der schwenkbaren Öffnungs- und Schließvorrichtung für eine smarte Toilettenabdeckung.
Figur 4 zeigt eine andere Schnittansicht der schwenkbaren Öffnungs- und Schließvorrichtung für eine smarte Toilettenabdeckung.

### Ausführungsbeispiel

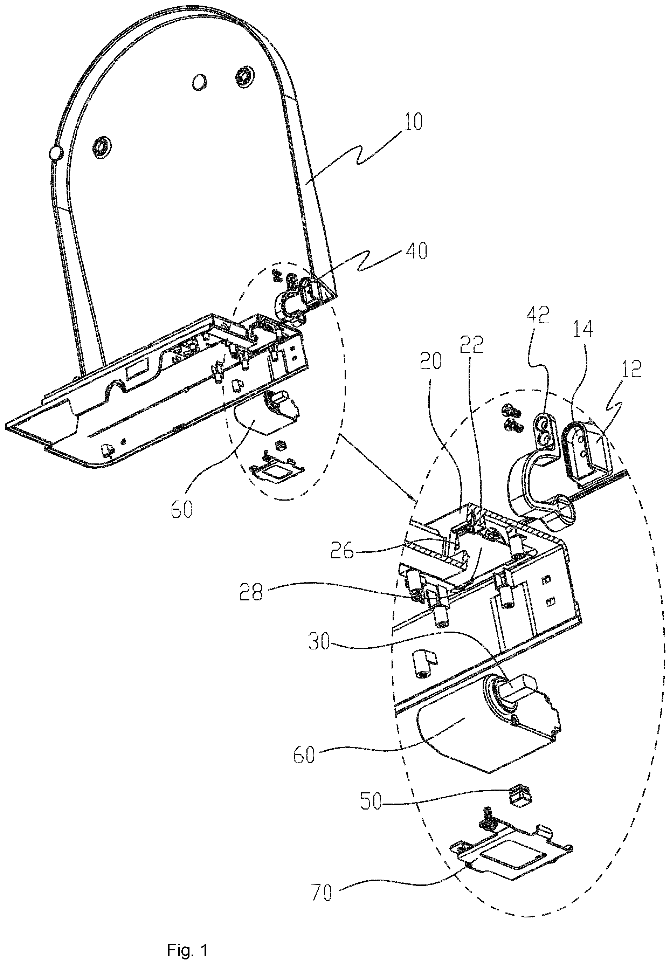

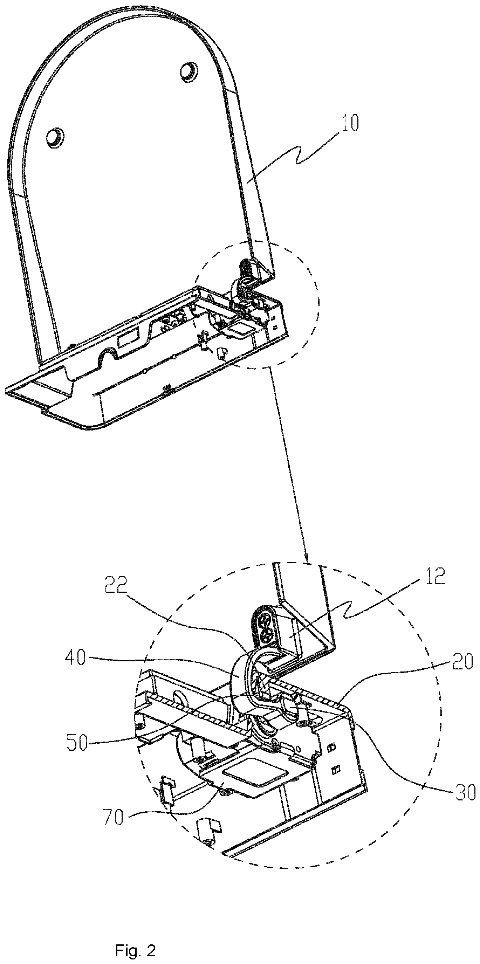

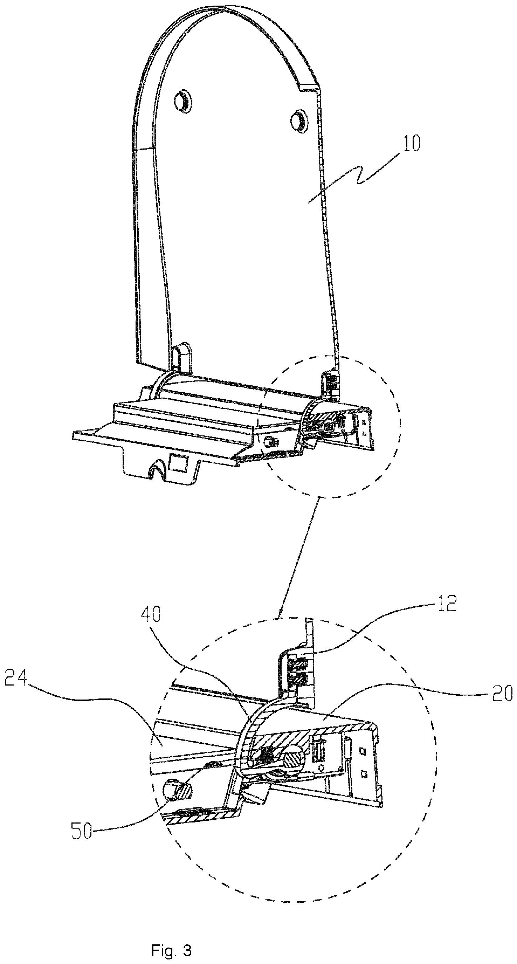

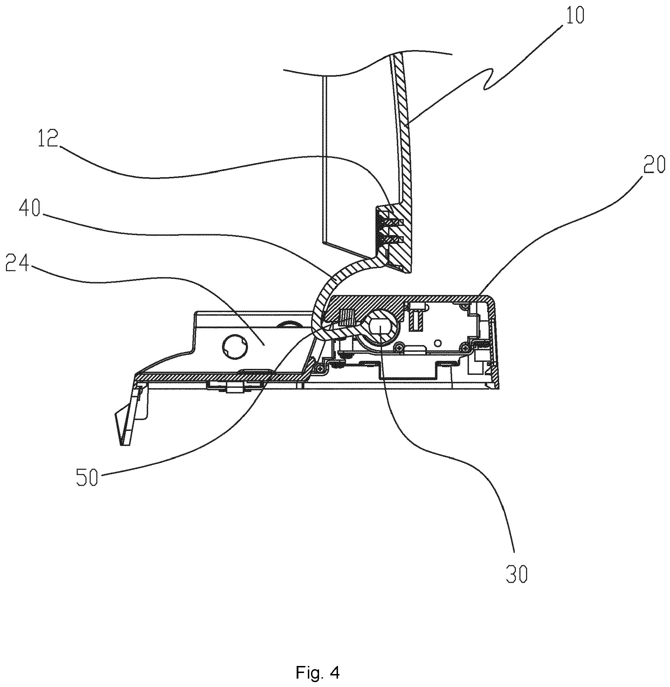

Wie in Figur 1 bis Figur 4 gezeigt, handelt es sich um eine schwenkbare Öffnungs- und Schließvorrichtung für eine smarte Toilettenabdeckung, umfassend eine obere Abdeckung 10 und ein rückwärtiges Gehäuse 20, wobei die vordere Abdeckung relativ zu dem rückwärtigen Gehäuse zum Öffnen angehoben und zum Schließen abgesenkt werden kann, wobei die obere Abdeckung nach dem Absenken zum Schließen an der Vorderseite des rückwärtigen Gehäuses angeordnet ist. In dem rückwärtigen Gehäuse 20 sind eine Schwenkachse 30 und ein Gelenkteil 40 angeordnet, wobei ein Ende des Gelenkteils 40 mit der Schwenkachse 30 verbunden ist, während das andere Ende des Gelenkteils aus der Vorderseite des rückwärtigen Gehäuses 20 herausragt und mit der oberen Abdeckung 10 verbunden ist. In dem rückwärtigen Gehäuse 20 ist ferner ein Gummipuffer 50 vorgesehen, der mit dem Gelenkteil 40 zusammenwirkt. Die obere Abdeckung 10 befindet sich nach dem Anheben zum Öffnen oberhalb des rückwärtigen Gehäuses 20 und das Gelenkteil 40 presst den Gummipuffer 50 nach oben. Es versteht sich, dass für eine sehr gute Anbringung der oberen Abdeckung normalerweise zwei Gelenkteile 40 zum Einsatz kommen, so dass jeweils links und rechts ein Gelenkteil vorgesehen ist. Bei der vorliegenden Ausführungsform ist an der Vorderseite des rückwärtigen Gehäuses 30 eine Aussparung 26 vorgesehen, welche ein Hinausragen des Gelenkteils ermöglicht.

Vorzugsweise ist das Gelenkteil 40 C-förmig ausgebildet, wobei das andere Ende des Gelenkteils 40 mit der Unterseite der oberen Abdeckung 10 verbunden ist.

Vorteilhaft ist vorgesehen, dass das andere Ende des Gelenkteils 40 derart abgebogen ist, dass es eine flache Druckplatte 42 bildet, die mit der oberen Abdeckung 10 fest verbunden ist. Die Druckplatte vergrößert die Kontaktfläche mit der oberen Abdeckung, was die Verbindung stärker macht.

Vorteilhaft ist vorgesehen, dass auf der Unterseite der oberen Abdeckung 10 ein der Druckplatte 42 zugeordneter Positioniervorsprung 12 ausgebildet ist, wobei in dem Positioniervorsprung eine Befestigungsaufnahme 14 ausgebildet ist, und wobei die Druckplatte 42 in die Befestigungsaufnahme 14 eingesetzt ist.

Vorzugsweise ist auf der Unterseite des rückwärtigen Gehäuses 20 ein Vorsprung 22 vorgesehen, wobei der Gummipuffer 50 auf den Vorsprung 22 gesteckt ist. Oder es ist, wie bei der vorliegenden Ausführungsform, in dem Vorsprung 22 eine Ausnehmung vorgesehen, und ein Ende des Gummipuffers 50 ist unter Verformung in den Vorsprung eingepresst.

Vorteilhaft ist vorgesehen, dass die hintere Endfläche der oberen Abdeckung 10 und die Vorderseite des rückwärtigen Gehäuses 20 als geneigte Flächen ausgebildet sind, die aufeinander abgestimmt sind. Es versteht sich, dass solche geneigten Flächen ein besseres Öffnen der oberen Abdeckung ermöglichen, was bedeutet, dass die obere Abdeckung lediglich mit einem sehr kleinen Winkel geöffnet werden muss, um deren hinteres Ende auf die Oberseite des rückwärtigen Gehäuses zu schwenken.

Vorteilhaft ist vorgesehen, dass der untere Bereich der Vorderseite des rückwärtigen Gehäuses 20 einen sich nach vorne erstreckenden Verbindungsabschnitt 24 zur schwenkbaren Anlenkung eines Sitzes aufweist. Der Verbindungsabschnitt zur Anlenkung eines Sitzes dient zur Verbindung des Sitzes, wobei diesbezüglich auf den Stand der Technik verwiesen werden kann.

Vorteilhaft ist vorgesehen, dass innerhalb des rückwärtigen Gehäuses 20 eine Montageaufnahme 28 ausgebildet ist, wobei ferner ein Elektromotor und eine Getriebezahnradgruppe vorgesehen sind, die mit dem Elektromotor und der Schwenkachse 30 in Übertragungsverbindung steht. Somit kann der Elektromotor die obere Abdeckung zum Öffnen oder Absenken antreiben. Bei der vorliegenden Ausführungsform bilden der Elektromotor und die Getriebezahnradgruppe ein Antriebsmodul 60, das in die Montageaufnahme 28 eingesetzt ist, wobei eine Befestigungsplatte 70 mittels Schrauben mit der rückwärtigen Abdeckung 20 verbunden ist, um das Antriebsmodul in der Montageaufnahme zu sichern.

Vorteilhaft ist vorgesehen, dass ein Ende des Gelenkteils 40 die Schwenkachse 30 umgreift. Bei der vorliegenden Ausführungsform bildet ein Ende des Gelenkteils 40 eine nicht kreisförmige Öffnung, beispielsweise eine quadratische Öffnung, welche die Schwenkachse umgibt, um eine drehfeste Verbindung in Umfangsrichtung zu schaffen.

Vorteilhaft ist vorgesehen, dass es sich bei dem Gelenkteil 40 um ein Gelenkteil aus Metall handelt.

Vorstehend wurden lediglich vorteilhafte Ausführungsbeispiele der Erfindung beschrieben, ohne dass diese eine Beschränkung des Umfangs der Erfindung bedeuten. Im Umfang der vorliegenden Erfindung und dem Inhalt der Beschreibung liegende äquivalente Modifikationen oder Ausgestaltungen fallen sämtlich unter den Schutzumfang der vorliegenden Erfindung.

## Patentansprüche

1. Schwenkbare Öffnungs- und Schließvorrichtung für eine smarte Toilettenabdeckung, umfassend eine obere Abdeckung und ein rückwärtiges Gehäuse, wobei die vordere Abdeckung relativ zu dem rückwärtigen Gehäuse zum Öffnen angehoben und zum Schließen abgesenkt werden kann, wobei die obere Abdeckung nach dem Absenken zum Schließen an der Vorderseite des rückwärtigen Gehäuses angeordnet ist, **dadurch gekennzeichnet, dass** in dem rückwärtigen Gehäuse eine Schwenkachse und ein Gelenkteil angeordnet sind, wobei ein Ende des Gelenkteils mit der Schwenkachse verbunden ist, während das andere Ende des Gelenkteils aus der Vorderseite des rückwärtigen Gehäuses herausragt und mit der oberen Abdeckung verbunden ist, wobei in dem rückwärtigen Gehäuses ferner ein Gummipuffer vorgesehen ist, der mit dem Gelenkteil zusammenwirkt, und wobei sich die obere Abdeckung nach dem Anheben zum Öffnen oberhalb des rückwärtigen Gehäuses befindet und das Gelenkteil den Gummipuffer nach oben presst.

2. Schwenkbare Öffnungs- und Schließvorrichtung für eine smarte Toilettenabdeckung nach Anspruch 1, **dadurch gekennzeichnet, dass** das Gelenkteil C-förmig ausgebildet ist, wobei das andere Ende des Gelenkteils mit der Unterseite der oberen Abdeckung verbunden ist.

3. Schwenkbare Öffnungs- und Schließvorrichtung für eine smarte Toilettenabdeckung nach Anspruch 2, **dadurch gekennzeichnet, dass** das andere Ende des Gelenkteils derart abgebogen ist, dass es eine flache Druckplatte bildet, die mit der oberen Abdeckung fest verbunden ist.

4. Schwenkbare Öffnungs- und Schließvorrichtung für eine smarte Toilettenabdeckung nach Anspruch 3, **dadurch gekennzeichnet, dass** auf der Unterseite der oberen Abdeckung ein der Druckplatte zugeordneter Positioniervorsprung vorgesehen ist, wobei in dem Positioniervorsprung eine Befestigungsaufnahme ausgebildet ist, und wobei die Druckplatte in die Befestigungsaufnahme eingesetzt ist.

5. Schwenkbare Öffnungs- und Schließvorrichtung für eine smarte Toilettenabdeckung nach Anspruch 1, **dadurch gekennzeichnet, dass** auf der Unterseite des rückwärtigen Gehäuses ein Vorsprung vorgesehen ist, wobei der Gummipuffer auf den Vorsprung gesteckt ist oder in dem Vorsprung eine Ausnehmung vorgesehen ist, in die ein Ende des Gummipuffers unter Verformung eingepresst ist.

6. Schwenkbare Öffnungs- und Schließvorrichtung für eine smarte Toilettenabdeckung nach Anspruch 1 oder 5, **dadurch gekennzeichnet, dass** die hintere Endfläche der oberen Abdeckung und die Vorderseite des rückwärtigen Gehäuses als geneigte Flächen ausgebildet sind, die aufeinander abgestimmt sind.

7. Schwenkbare Öffnungs- und Schließvorrichtung für eine smarte Toilettenabdeckung nach Anspruch 6, **dadurch gekennzeichnet, dass** der untere Bereich der Vorderseite des rückwärtigen Gehäuses einen sich nach vorne erstreckenden Verbindungsabschnitt zur schwenkbaren Anlenkung eines Sitzes aufweist.

8. Schwenkbare Öffnungs- und Schließvorrichtung für eine smarte Toilettenabdeckung nach Anspruch 1, **dadurch gekennzeichnet, dass** innerhalb des rückwärtigen Gehäuses eine Montageaufnahme ausgebildet ist, wobei ferner ein Elektromotor und eine Getriebezahnradgruppe vorgesehen sind, die mit dem Elektromotor und der Schwenkachse in Übertragungsverbindung steht, wobei der Elektromotor und die Getriebezahnradgruppe zusammengebaut ein Antriebsmodul bilden, das in die Montageaufnahme eingesetzt ist, und wobei eine Befestigungsplatte mittels Schrauben mit der rückwärtigen Abdeckung verbunden ist, um das Antriebsmodul in der Montageaufnahme zu sichern.

9. Schwenkbare Öffnungs- und Schließvorrichtung für eine smarte Toilettenabdeckung nach Anspruch 1 oder 8, **dadurch gekennzeichnet, dass** ein Ende des Gelenkteils die Schwenkachse umgreift.

10. Schwenkbare Öffnungs- und Schließvorrichtung für eine smarte Toilettenabdeckung nach Anspruch 1, **dadurch gekennzeichnet, dass** es sich bei dem Gelenkteil um ein Gelenkteil aus Metall handelt.
